# FASCICULE DE BREVET EUROPEEN

(11) **EP 4 204 332 B1**
(45) Date de publication et mention de la délivrance du brevet: **03.09.2025**
(21) Numéro de dépôt: 21770172.1
(22) Date de dépôt: 27.08.2021
(51) Int. Cl.: B65G 1/137, B65G 57/30, B65G 1/04

(54) **STATION DE PRESENTATION DE CONTENEURS**
CONTAINER-DISPLAY-STATION
CONTAINER DISPLAY STATION

(30) Priorité: 31.08.2020 FR 2008812
(43) Date de publication de la demande: 05.07.2023
(73) Titulaire: Exotec Product France, 59170 Croix (FR)
(72) Inventeur: CHATAIN, Marc, 68230 ZIMMERBACH (FR); LEPILLIER, Loïc, 59290 WASQUEHAL (FR)
(74) Mandataire: Plasseraud IP
(86) Numéro de dépôt international: PCT/EP2021/073787
(87) Numéro de publication internationale: WO 2022/043521

(56) Documents cités:
- EP-A1- 3 647 231
- WO-A1-2017/211640
- WO-A1-2018/069282
- WO-A1-2020/074717
- WO-A2-2007/011871
- US-A- 2 947 125

## Description

### DOMAINE DE L'INVENTION

L'invention concerne le domaine du convoyage de colis et plus particulièrement l'orientation des colis au sein d'un système de routage et distribution de colis.

### ARRIERE PLAN DE L'INVENTION

Il est connu des systèmes automatisés de stockage et de mise à disposition de conteneurs comprenant un volume de stockage des conteneurs dans lequel évolue un chariot automatisé de prélèvement et de convoyage de conteneur. Le chariot est piloté par une unité de contrôle électronique qui désigne un ou plusieurs conteneurs à livrer à une station de présentation de conteneurs.

Généralement, le chariot dépose le conteneur en un premier point de livraison sur le tapis rotatif d'un carrousel qui amène le conteneur à un point de présentation du conteneur auquel un opérateur peut accéder au contenu du conteneur. Une fois que les éléments souhaités ont été prélevés dans le conteneur par l'opérateur, le tapis rotatif retourne le conteneur depuis le point de présentation à un point d'évacuation où l'automate récupère le conteneur pour le replacer dans la zone de stockage.

Un tel carrousel requiert que l'opérateur soit formé aux risques que représentent l'ensemble des pièces en mouvement et impose des précautions d'utilisation tels que des mécanismes de sécurité qui nuisent à la productivité de la station de présentation en terme de volume de conteneurs présentés par unité de temps. L'encombrement d'une telle station de présentation réduit le nombre de stations pouvant être installées en lien avec un système de stockage, ce qui limite également la productivité du système de stockage en terme de volume de conteneurs présentés par unité de temps.

Le document WO2017/211640 A1 décrit un système de stockage présentant une station de présentation d'au moins un conteneur selon le préambule de la revendication 1.

### OBJET DE L'INVENTION

L'invention a pour objet d'améliorer la productivité d'un système automatisé de stockage et de mise à disposition de conteneurs comprenant une station de présentation.

### RESUME DE L'INVENTION

A cette fin, on prévoit une station de présentation d'au moins un conteneur comprenant un châssis délimitant un volume extérieur et un volume intérieur et présentant une ouverture d'accès au volume intérieur, un dispositif de convoyage contenu au moins partiellement dans le volume intérieur et qui comprend une première cheminée d'amenée de conteneur à un premier point de livraison, la première cheminée étant et s'étendant selon une première direction d'amenée. Le dispositif de convoyage comprend également une deuxième cheminée d'évacuation de conteneur depuis un deuxième point d'évacuation, la deuxième cheminée étant et s'étendant selon une deuxième direction d'évacuation. La station de présentation comprend également un premier convoyeur motorisé de transfert pour transférer un conteneur selon une troisième direction de transfert depuis le premier point de livraison jusqu'à un troisième point de prise en charge. Selon l'invention, une plateforme mobile est munie d'un deuxième convoyeur motorisé et la plateforme mobile est agencée pour déplacer le deuxième convoyeur selon une quatrième direction de transfert entre le troisième point de prise en charge et un quatrième point de présentation agencé de manière à ce qu'un volume intérieur d'un conteneur situé en le quatrième point de présentation soit accessible par un opérateur depuis le volume extérieur, le deuxième convoyeur étant agencé pour transférer un conteneur depuis le quatrième point de présentation au deuxième point d'évacuation selon une cinquième direction de transfert.

On obtient ainsi une station de présentation compacte qui requiert une surface au sol réduite par rapport aux solutions de l'art antérieur et permet d'améliorer la productivité d'une surface de stockage donnée.

On améliore encore la compacité de la station de présentation tout en constituant un tampon d'approvisionnement lorsque la première longueur du premier convoyeur est choisie pour accueillir deux conteneurs et/ou la deuxième longueur du deuxième convoyeur est choisie pour accueillir un seul conteneur.

La compacité de la station est encore améliorée lorsque la plateforme mobile est de type « table à ciseaux » et/ou que la deuxième direction d'évacuation est sensiblement parallèle à la première direction d'amenée et/ou la troisième direction de transfert est sensiblement orthogonale à la première direction d'amenée et/ou orthogonale à la deuxième direction d'évacuation.

La compacité de la station de présentation est encore optimisée lorsque la quatrième direction est sensiblement orthogonale à la troisième direction.

On permet l'utilisation de la station de présentation par un utilisateur dépourvu de formation particulière lorsque la station de présentation comprend un dispositif d'occultation de l'ouverture d'accès.

Avantageusement, lorsque le châssis repose sur un support horizontal, la première direction d'amenée, la deuxième direction d'évacuation et la quatrième direction de transfert sont verticales, et dans laquelle la troisième direction de transfert et la cinquième direction de transfert sont horizontales.

Avantageusement encore, la station de présentation comprend un dispositif pour empêcher l'extraction d'un conteneur au travers de l'ouverture d'accès.

La compacité de la station de présentation est encore améliorée lorsque la station comprend un dispositif d'empilement de conteneurs pour réaliser une pile de conteneurs reposant au niveau du deuxième point d'évacuation.

On obtient un dispositif d'empilement particulièrement robuste et fiable lorsque le dispositif d'empilement de conteneurs comprend un bras relié à la plateforme mobile et/ou que le dispositif d'empilement de conteneurs comprend au moins un mors élastique.

L'invention s'applique également à un système automatisé de stockage et de mise à disposition de conteneurs comprenant un volume de stockage relié à au moins une station de présentation telle que définie ci-dessus.

L'invention s'applique également à un procédé de présentation de conteneurs mis en œuvre par une station de présentation telle que définie ci-dessus, le procédé comprenant les étapes suivantes :
- déposer un premier conteneur en le premier point de livraison ;
- commander le premier convoyeur de manière à transférer le premier conteneur en le troisième point de prise en charge ;
- actionner la plateforme mobile de manière à transférer le premier conteneur depuis le troisième point de prise en charge vers le quatrième point de présentation ;
- commander le deuxième convoyeur de manière à transférer le premier conteneur depuis le quatrième point de présentation vers le deuxième point d'évacuation.

Avantageusement, lorsque la première longueur du premier convoyeur est choisie pour accueillir deux conteneurs et la deuxième longueur du deuxième convoyeur est choisie pour accueillir un seul conteneur, le procédé comprend les étapes supplémentaires suivantes :
- antérieurement à l'étape de commander le premier convoyeur de manière à transférer le premier conteneur depuis le premier point de livraison vers le troisième point de prise en charge, commander le premier convoyeur de manière à libérer le premier point de livraison tout en conservant le premier conteneur sur le premier convoyeur ;
- déposer un deuxième conteneur en le premier point de livraison ;
- postérieurement à l'étape de commander le premier convoyeur de manière à transférer le premier conteneur en le troisième point de prise en charge, déposer un troisième conteneur en le premier point de livraison.

L'utilisation de la station de présentation est sécurisée lorsque, la station de présentation comprenant un dispositif d'occultation de l'ouverture d'accès, le procédé comprend une étape supplémentaire, située entre l'étape d'actionner la plateforme mobile de manière à transférer le premier conteneur depuis le troisième point de prise en charge vers le quatrième point de présentation et l'étape de commander le deuxième convoyeur de manière à transférer le premier conteneur depuis le quatrième point de présentation vers le deuxième point d'évacuation, l'étape supplémentaire consistant à actionner le dispositif d'occultation de manière à libérer l'ouverture d'accès puis actionner le dispositif d'occultation de manière à occulter l'ouverture d'accès.

Le volume de conteneurs présenté est amélioré lorsque, la station de présentation comprenant un dispositif d'empilement de conteneurs pour réaliser une pile de conteneurs reposant au niveau du deuxième point d'évacuation, le procédé comprend l'étape de réaliser une pile de conteneurs au niveau du deuxième point d'évacuation.

D'autres caractéristiques et avantages de l'invention ressortiront à la lecture de la description qui suit de modes de réalisation particuliers non limitatifs de l'invention.

### BREVE DESCRIPTION DES DESSINS

[Fig. 1] la figure 1 est une vue schématique en plan d'un système automatisé de stockage selon un premier mode de réalisation de l'invention, le système automatisé de stockage étant dans un premier état ;
[Fig. 2] la figure 2 est une vue identique à celle de la figure 1 du système automatisé de stockage dans un deuxième état ;
[Fig. 3] la figure 3 est une vue identique à celle de la figure 1 du système automatisé de stockage dans un troisième état ;
[Fig. 4] la figure 4 est une vue identique à celle de la figure 1 du système automatisé de stockage dans un quatrième état ;
[Fig. 5] la figure 5 est une vue identique à celle de la figure 1 du système automatisé de stockage dans un cinquième état ;
[Fig. 6] la figure 6 est une vue identique à celle de la figure 1 du système automatisé de stockage dans un sixième état ;
[Fig. 7] la figure 7 est une vue identique à celle de la figure 1 du système automatisé de stockage dans un septième état ;
[Fig. 8] la figure 8 est une vue identique à celle de la figure 1 du système automatisé de stockage dans un huitième état ;
[Fig. 9] la figure 9 est une vue de détail de la station de présentation du système automatisé de stockage de la figure 1 ;
[Fig. 10] la figure 10 est une vue schématique en plan d'un système automatisé de stockage selon un deuxième mode de réalisation de l'invention, le système automatisé de stockage étant dans un premier état ;
[Fig. 11] la figure 11 est une vue schématique de détail des mors de la station de présentation du système automatisé de stockage de la figure 10 ;
[Fig. 12] la figure 12 est une vue schématique en perspective du système automatisé de stockage de la figure 10 ;
   [
[Fig. 13] la figure 13 est une vue schématique en perspective du système automatisé de stockage de la figure 10 ;
[Fig. 14] la figure 14 est une vue identique à celle de la figure 10 du système automatisé de stockage dans un deuxième état ;
[Fig. 15] la figure 15 est une vue de détail du dispositif d'empilement dans un troisième état ;
[Fig. 16] la figure 16 est une vue de détail du dispositif d'empilement dans un quatrième état ;
[Fig. 17] la figure 17 est une vue de détail du dispositif d'empilement dans un cinquième état ;
[Fig. 18] la figure 18 est une vue identique à celle de la figure 10 du système automatisé de stockage dans un sixième état ;
[Fig. 19] la figure 19 est une vue identique à celle de la figure 10 du système automatisé de stockage dans un septième état ;
[Fig. 20] la figure 20 est une vue identique à celle de la figure 10 du système automatisé de stockage dans un huitième état.

### DESCRIPTION DETAILLEE DE L'INVENTION

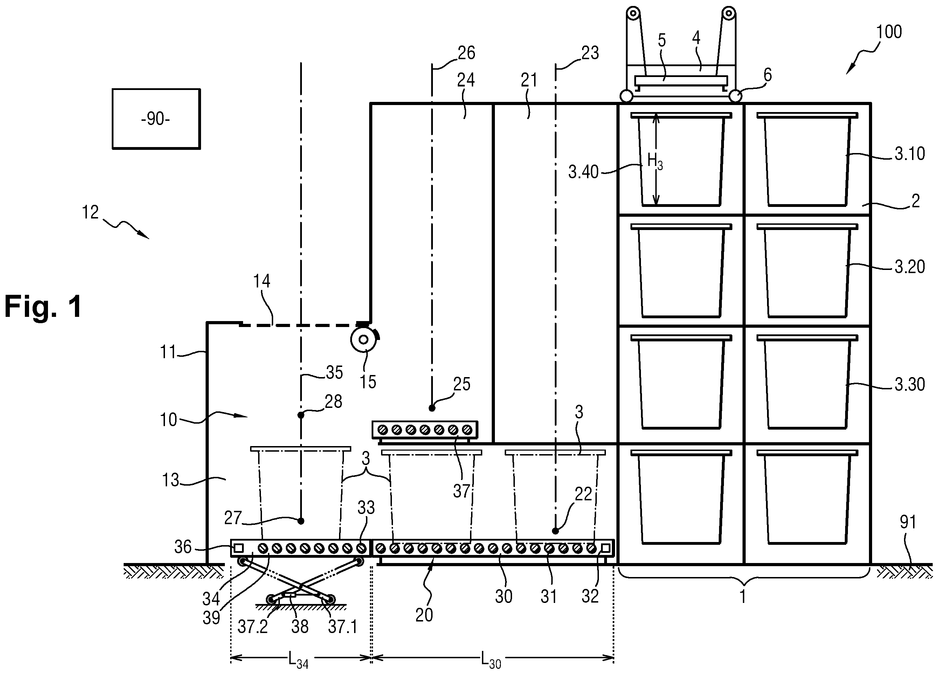

En référence aux figures 1 à 9, le système automatisé de stockage et de mise à disposition de conteneurs selon l'invention, et généralement désigné 100, comprend un volume de stockage 1 relié à une station de présentation 10. Le volume de stockage 1 comprend une pluralité d'alvéoles 2 renfermant chacune un conteneur 3 sensiblement parallélépipédique de première largeur l₃, de première longueur L₃ et de première hauteur H₃. A des fins d'exemple, nous considérerons quatre conteneurs 3 : un premier conteneur 3.10, un deuxième conteneur 3.20, un troisième conteneur 3.30 et un quatrième conteneur 3.40. Un chariot automatisé 4 dispose d'un grappin 5 pour saisir une portion supérieure de chaque conteneur 3. Le chariot 4 est pourvu de roues 6 pour se déplacer sur une partie supérieure du volume de stockage 1 selon des modalités connues de l'homme du métier. Le chariot 4 et la station de présentation 10 sont reliés à une unité de commande électronique 90.

La station de présentation 10 comprend un châssis 11 délimitant un volume extérieur 12 et un volume intérieur 13. Le châssis 11 est ici représenté reposant sur une surface 91 horizontale. Le châssis 11 présente une ouverture 14 d'accès au volume intérieur 13. L'ouverture 14 est, ici, rectangulaire de deuxième largeur l₁₄ et de deuxième longueur L₁₄ Un volet 15 roulant électrique s'étend devant l'ouverture 14 pour sélectivement occulter l'ouverture d'accès 14.

Le volume intérieur 13 renferme un dispositif de convoyage 20 qui comprend une première cheminée 21 d'amenée qui débouche sur un premier point de livraison 22. La première cheminée 21 est sensiblement rectiligne et s'étend selon une première direction 23 d'amenée verticale. Le dispositif de convoyage comprend également une deuxième cheminée 24 d'évacuation qui débouche sur un deuxième point d'évacuation 25. La deuxième cheminée 24 est sensiblement rectiligne et s'étend selon une deuxième direction d'évacuation 26 verticale. Un premier convoyeur 30 de transfert s'étend selon une troisième direction de transfert 31 pour amener un conteneur depuis le premier point de livraison 22 *jusqu'à* un troisième point de prise en charge 27. Le premier convoyeur 30 est un convoyeur à rouleaux motorisés dont la première motorisation 32 est reliée à l'unité de commande électronique 90. Le dispositif de convoyage 20 comprend également une plateforme mobile 33 munie d'un deuxième convoyeur 34. La plateforme mobile 33 est agencée pour déplacer le deuxième convoyeur 34 selon une quatrième direction 35 verticale de transfert entre le troisième point de prise en charge 27 et un quatrième point de présentation 28. Le quatrième point de présentation 28 se situe à l'aplomb de l'ouverture 14 de sorte qu'un volume intérieur 3.2 d'un conteneur 3 situé en le quatrième point de présentation 28 soit accessible par un opérateur depuis le volume extérieur 12 au travers de l'ouverture 14. Le deuxième convoyeur 34 est un convoyeur à rouleaux motorisés dont la deuxième motorisation 36 est reliée à l'unité de commande électronique 90. Le deuxième convoyeur 34 s'étend horizontalement de manière à transférer, lorsque le deuxième convoyeur 34 est en le quatrième point de présentation 28, un conteneur depuis le quatrième point de présentation 28 vers le deuxième point d'évacuation 25 selon une cinquième direction de transfert 39. A cette fin, un troisième convoyeur 37 à rouleaux libres s'étend horizontalement au niveau du point d'évacuation.

La plateforme mobile 33 est une plateforme de type table à ciseaux comprenant une première bielle 37.1 et une deuxième bielle 37.2 actionnées de manière connue par un premier actionneur 38.

Comme visible en figure 1 à 10, le premier convoyeur 30 possède une première longueur L30 qui est choisie pour accueillir deux conteneurs 3 et la deuxième longueur L34 du deuxième convoyeur 34 est choisie pour accueillir un seul conteneur 3.

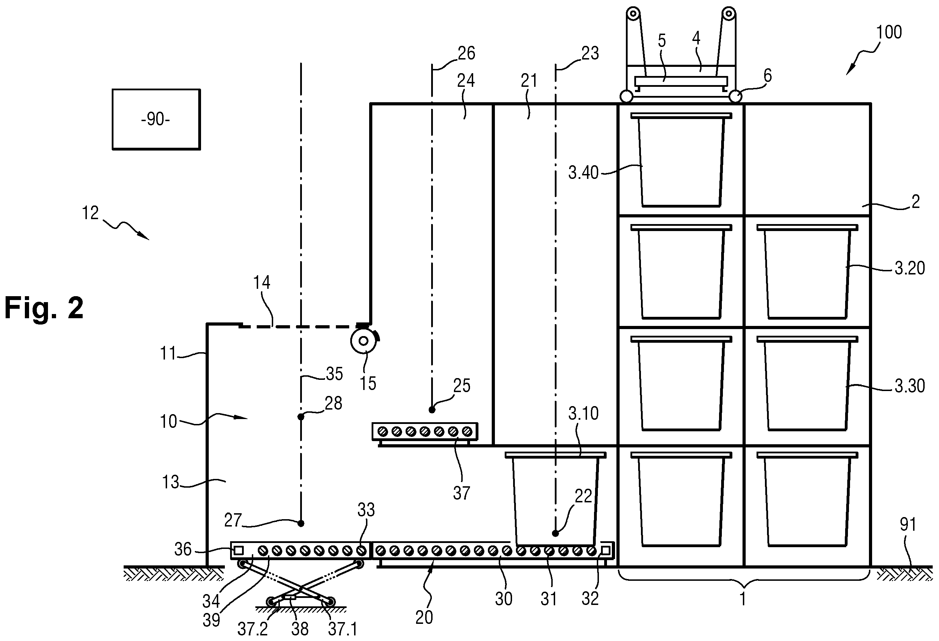

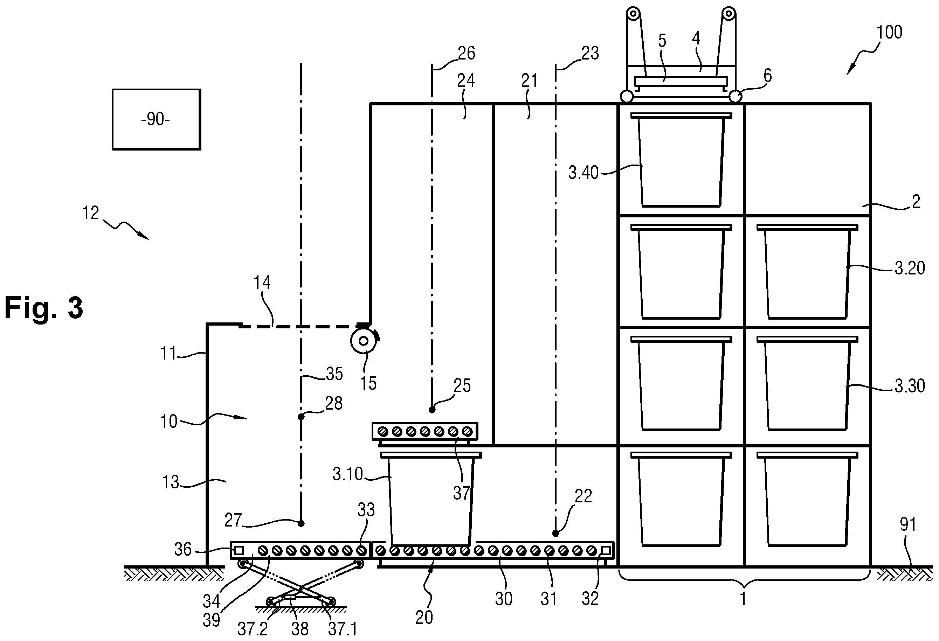

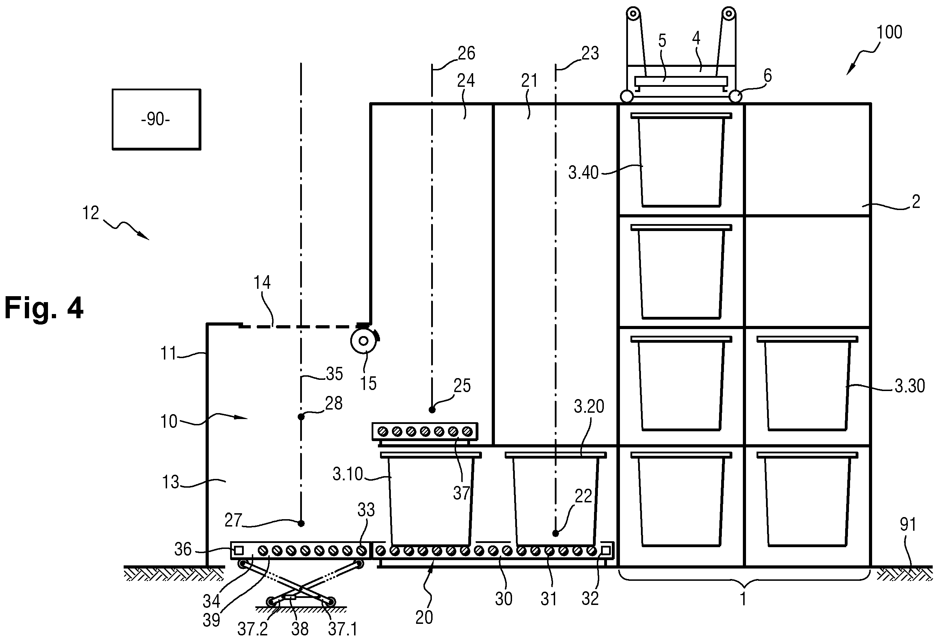

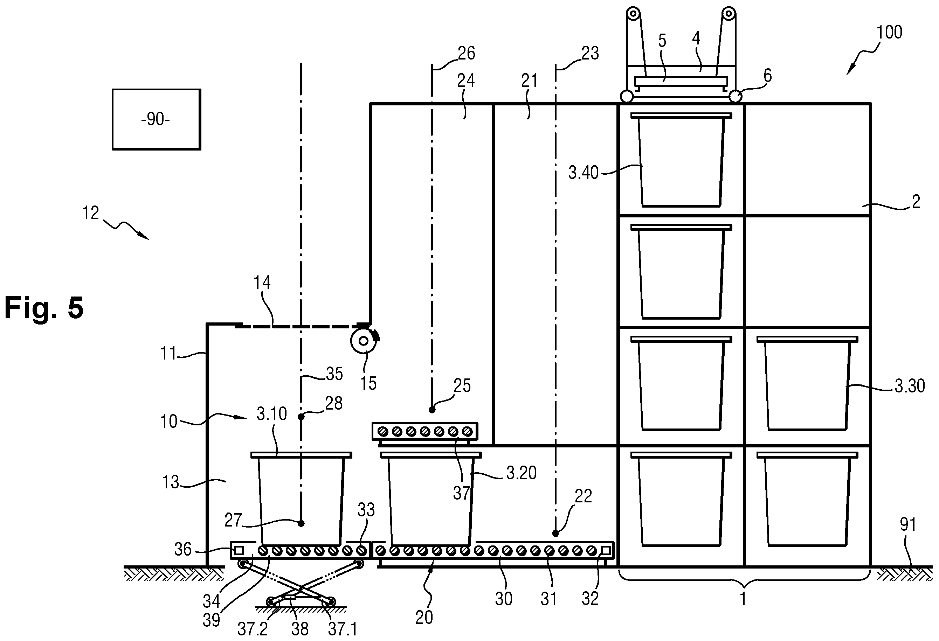

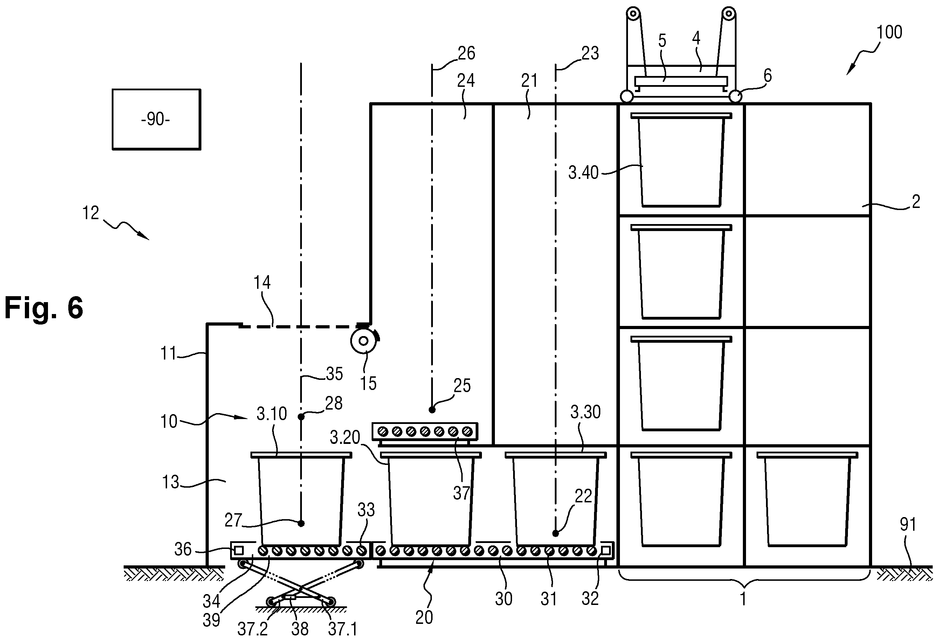

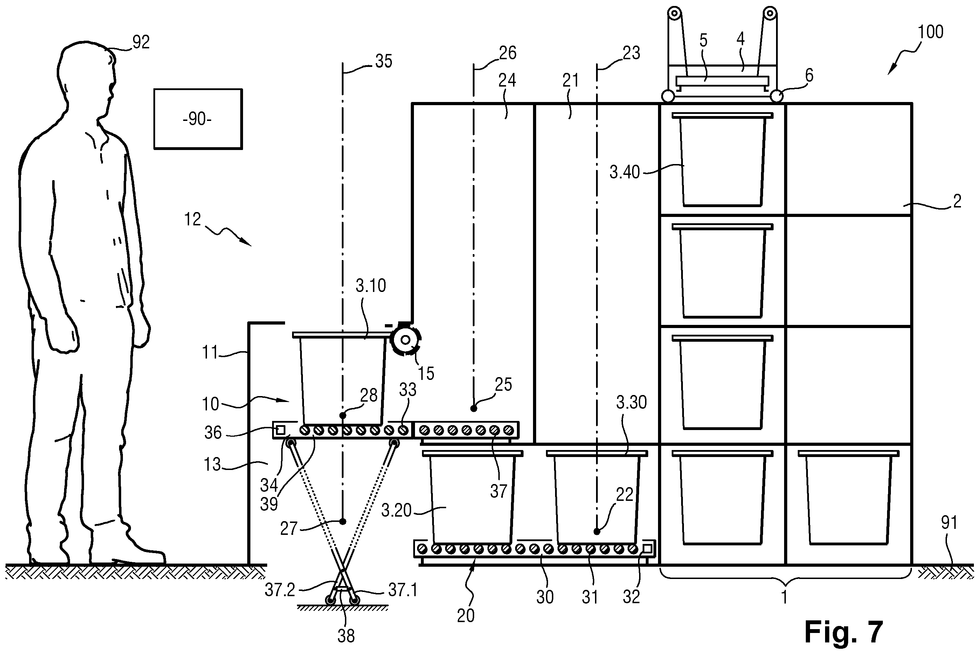

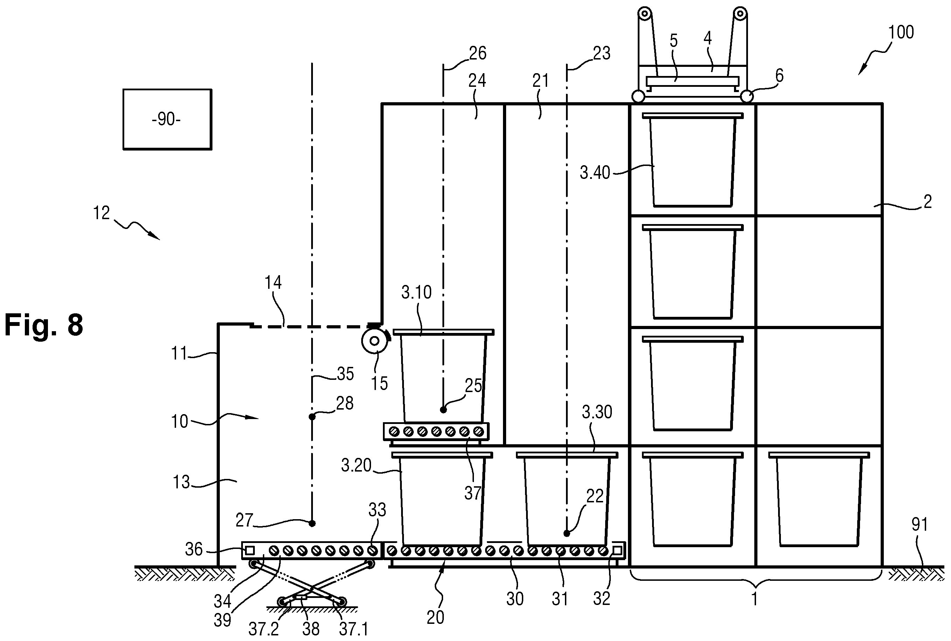

En fonctionnement, l'unité de commande 90 commande le chariot automatisé 4 pour qu'il dépose le premier conteneur 3.10 en le premier point de livraison en le descendant via la première cheminée 21 (figure 2- première étape). L'unité de commande 90 commande ensuite le premier convoyeur 30 de manière à libérer le premier point de livraison 22 tout en conservant le premier conteneur 3.10 sur le premier convoyeur 30 (figure 3- deuxième étape). L'unité de commande 90 commande ensuite le chariot automatisé 4 pour qu'il dépose le deuxième conteneur 3.20 en le premier point de livraison 22 (figure 4- troisième étape). Selon une quatrième étape représentée en figure 5, l'unité de commande 90 commande le premier convoyeur 30 de manière à transférer le premier conteneur 3.10 en le troisième point de prise en charge 27 sur le deuxième convoyeur 34, la plateforme mobile 33 ayant été préalablement baissée pour être amenée en le troisième point de prise en charge 27. Selon une cinquième étape représentée en figure 6, l'unité de commande 90 commande le chariot automatisé 4 pour qu'il dépose le troisième conteneur 3.30 en le premier point de livraison 22. Au cours de cette étape, la deuxième motorisation 36 du deuxième convoyeur 34 peut être pilotée ou non. Selon une sixième étape représentée en figure 7, l'unité de commande 90 commande le premier actionneur 38 de la plateforme mobile 33 de manière à transférer le premier conteneur 3.10 depuis le troisième point de prise en charge 27 vers le quatrième point de présentation 28. Dans cette position déployée de la plateforme mobile 33, le deuxième convoyeur 34 est au même niveau que le L'unité de commande 90 commande ensuite le volet 15 de manière à libérer l'ouverture d'accès 14, permettant à un utilisateur 92 d'accéder au contenu du premier conteneur 3.10 (figure 7). Lorsque le premier conteneur 3.10 est vide (la détection d'un tel état pouvant se faire par exemple par mesure du courant moteur consommé par le premier actionneur 38), l'unité de commande 90 commande la fermeture du volet 15 de manière à occulter l'ouverture d'accès 14 (septième étape). Selon une huitième étape, l'unité de commande 90 commande la plateforme mobile 33 de manière à transférer le premier conteneur 3.10 depuis le quatrième point de présentation 28 vers le deuxième point d'évacuation 25. Selon une neuvième étape, l'unité de commande 90 commande le premier actionneur 38 et la plateforme mobile 33 retourne dans une position rétractée dans laquelle le deuxième convoyeur 34 est au niveau du premier convoyeur 30 (figure 8).

Le cycle d'exploitation peut recommencer à la première étape en traitant le deuxième conteneur 3.20 sous réserve d'évacuer le premier conteneur 3.10 avant la reproduction de la huitième étape de transfert du deuxième conteneur 3.20 vers le deuxième point d'évacuation 25.

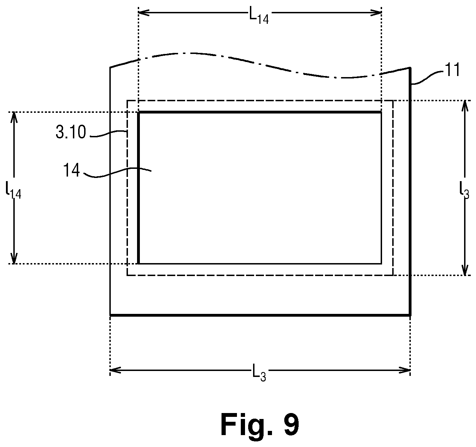

Comme visible en figures 7 et 9, la première largeur l₃ et la première longueur L₃ des conteneurs 3 sont respectivement supérieures à la deuxième largeur l₁₄ et la deuxième longueur L₁₄ de l'ouverture 14.

Les éléments identiques ou analogues à ceux précédemment décrits porteront une référence numérique identique à celle-ci dans la description qui suit d'un deuxième mode de réalisation de l'invention.

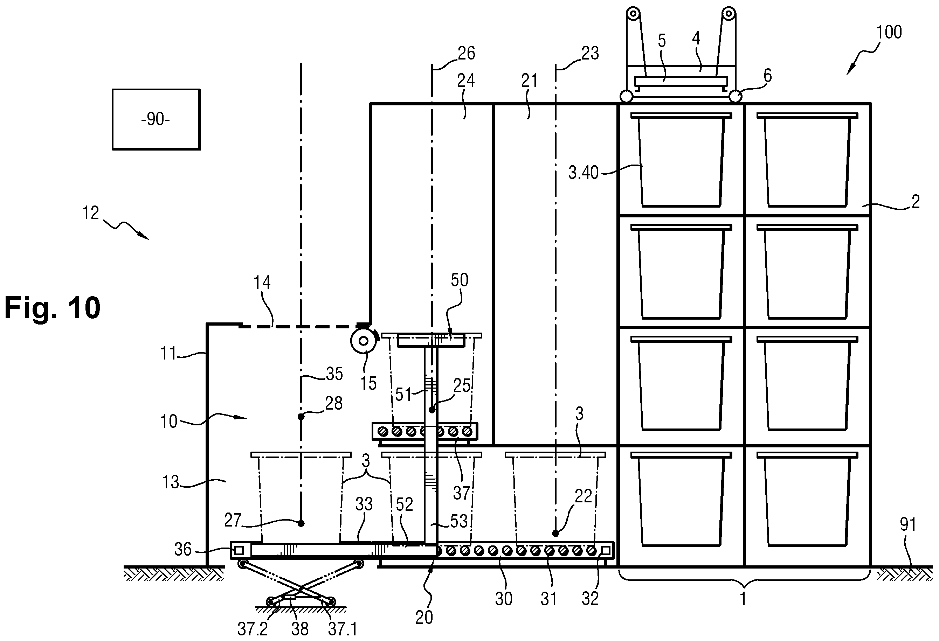

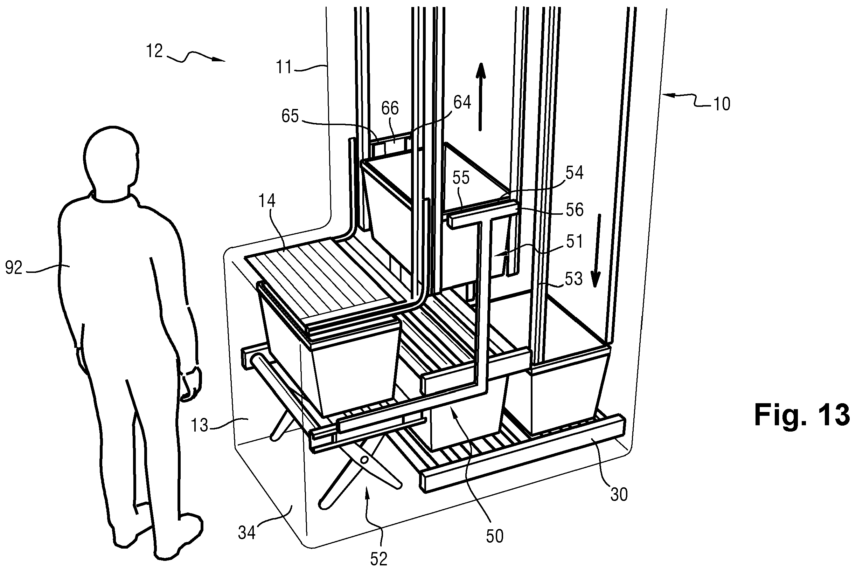

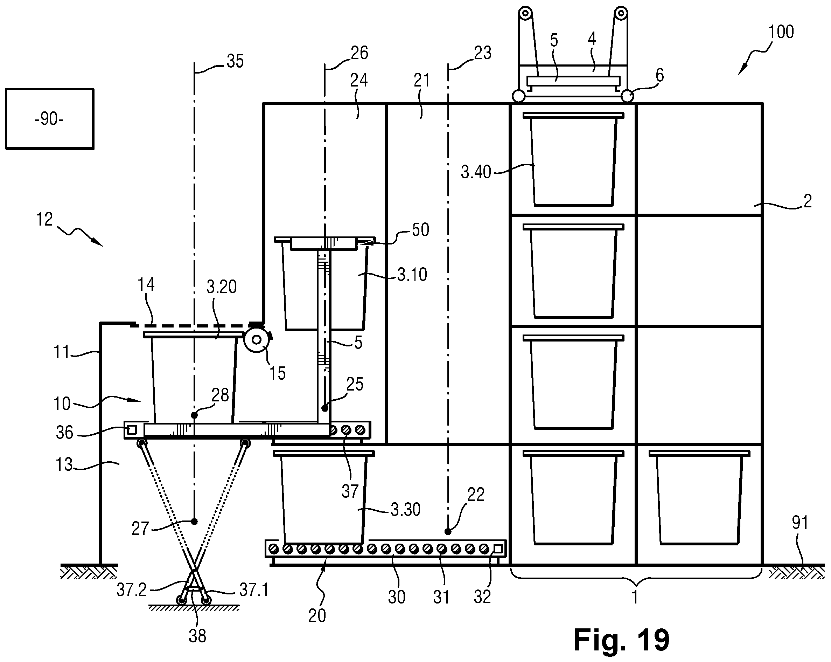

En référence aux figures 10 à 20, la station de présentation 10 comprend un dispositif 50 d'empilement de conteneurs 3 pour réaliser une pile de conteneurs. Le dispositif 50 comporte un premier bras 51 et un deuxième bras 61 fixés de part et d'autre de la plateforme mobile 33.

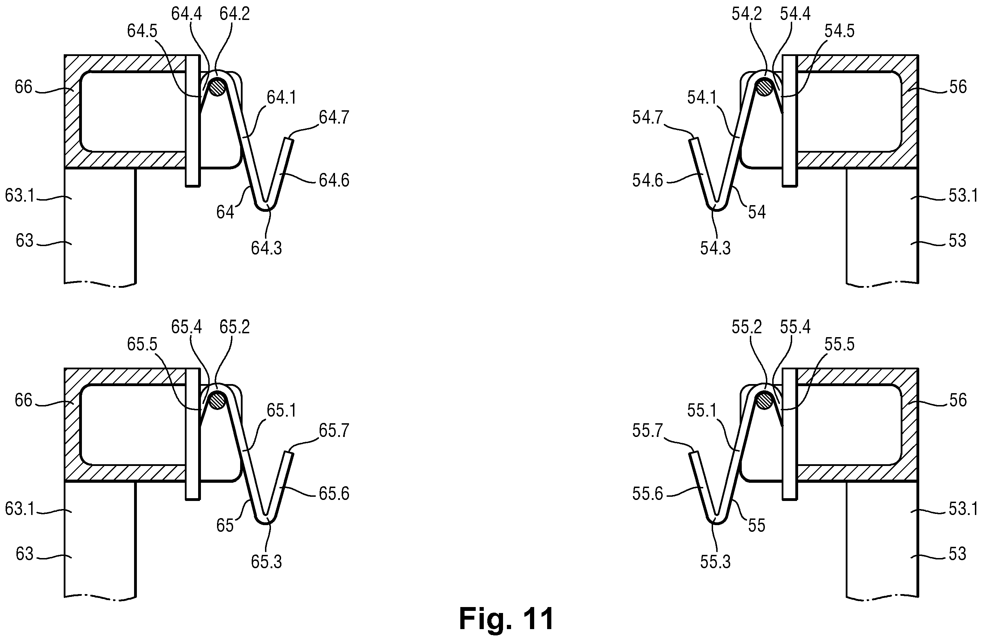

Le premier bras 51 est sensiblement en forme de L et comprend une première portion 52 qui s'étend sensiblement parallèlement à la troisième direction de transfert 31 et qui est solidaire de la plateforme mobile 33. Le premier bras 51 comprend également une deuxième portion 53 qui s'étend sensiblement à quatre-vingt-dix degrés de la première portion 52. Un premiers mors élastique 54 et un deuxième mors élastique 55 sont montés sur une première traverse 56 montée en la première extrémité 53.1 de la deuxième portion 53. Comme visible en figure 11, le premier mors élastique 54 est sensiblement en forme de S et comprend une première portion centrale 54.1 délimitée par une première inflexion 54.2 et un deuxième inflexion 54.3. Une première portion proximale 54.4 relie la première inflexion 54.2 à la première extrémité proximale 54.5. Une première portion distale 54.6 relie la deuxième inflexion 54.3 à la première extrémité distale 54.7. La première extrémité proximale 54.5 est en appui sur la première traverse 56 et la première inflexion 54.2 repose sur un arbre 56.1 solidaire de la première traverse 56. La première extrémité distale 54.7 est libre. Le deuxième mors élastique 55 est identique au premier mors élastique 54 et comprend une deuxième extrémité proximale 55.5 en appui sur la première traverse 56 et une troisième inflexion 55.2 qui repose sur l'arbre 56.1. Le deuxième mors 55 comprend également une deuxième portion centrale 55.1, une quatrième inflexion 55.3 et une deuxième extrémité distale 55.7 libre.

De manière homologue, le deuxième bras 61 est sensiblement en forme de L et comprend une troisième portion 62 qui s'étend sensiblement parallèlement à la troisième direction de transfert 31 et qui est solidaire de la plateforme mobile 33. Le deuxième bras 61 comprend également une quatrième portion 63 qui s'étend sensiblement à quatre-vingt-dix degrés de la troisième portion 62. Un troisième mors élastique 64 et un quatrième mors élastique 65 sont montés symétriquement au premier mors 54 et au deuxième mors 55 sur une deuxième traverse 66 montée en la deuxième extrémité 63.1 de la quatrième portion 63.

Comme visible en figure 11, le troisième mors élastique 64 comprend une troisième extrémité proximale 64.5 en appui sur la deuxième traverse 66 et une cinquième inflexion 64.2 qui repose sur un troisième arbre 66.1 solidaire de la deuxième traverse 66. Le troisième mors 64 comprend également une troisième portion centrale 64.1, une sixième inflexion 64.3 et une troisième extrémité distale 64.7 libre. Le quatrième mors élastique 65 comprend une quatrième extrémité proximale 65.5 en appui sur la deuxième traverse 66 et une septième inflexion 65.2 qui repose sur un quatrième arbre 66.2 solidaire de la deuxième traverse 66. Le quatrième mors 65 comprend également une quatrième portion centrale 65.1, une huitième inflexion 65.3 et une quatrième extrémité distale 65.7 libre.

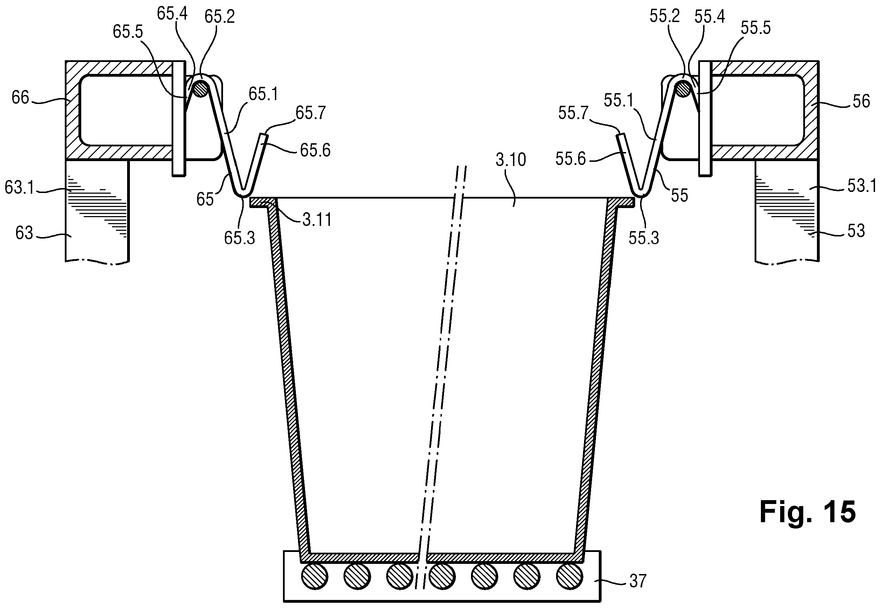

Selon ce deuxième mode de réalisation, les conteneurs 3 comprennent un rebord en saillie périphérique de sa portion supérieure. Ainsi le premier conteneur 3.10 comprend un premier rebord 3.11 périphérique (figures 15 à 17) et le deuxième conteneur 3.20 comprend un deuxième rebord 3.21 périphérique.

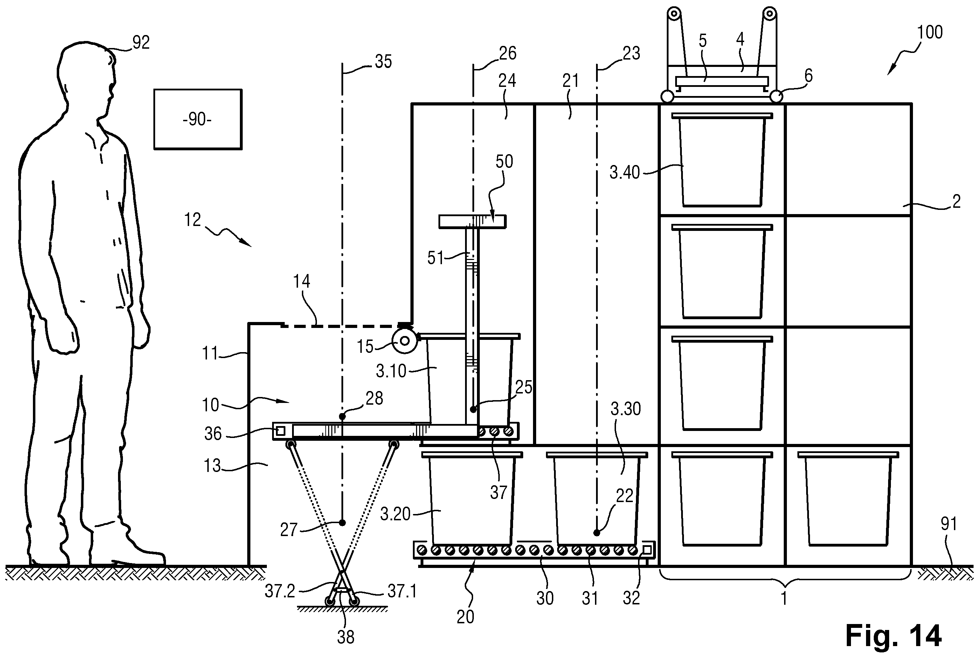

En fonctionnement, et selon ce deuxième mode de réalisation, les étapes comprises entre la première et la huitième étape sont identiques (figures 2 à 7). La figure 14 représente la configuration de la station de présentation 10 à l'issue de la huitième étape.

Selon une neuvième étape, l'unité de commande 90 commande le premier actionneur 38 de manière à ce que la plateforme mobile 33 retourne dans une position rétractée dans laquelle le deuxième convoyeur 34 est au niveau du premier convoyeur 30. Au cours de ce déplacement de la plateforme mobile 33, le premier bras 51 et le deuxième bras 61 réalisent un mouvement de translation relativement au troisième convoyeur 37 qui porte le premier conteneur 3.10. Ce mouvement rapproche les premier, deuxième, troisième et quatrième mors 54, 55, 64 et 65 du premier rebord 3.11 jusqu'à ce que la deuxième inflexion 54.3, la quatrième inflexion 55.3, la sixième inflexion 64.3 et la huitième inflexion 65.3 arrivent au contact du premier rebord 3.11 (figure 15).

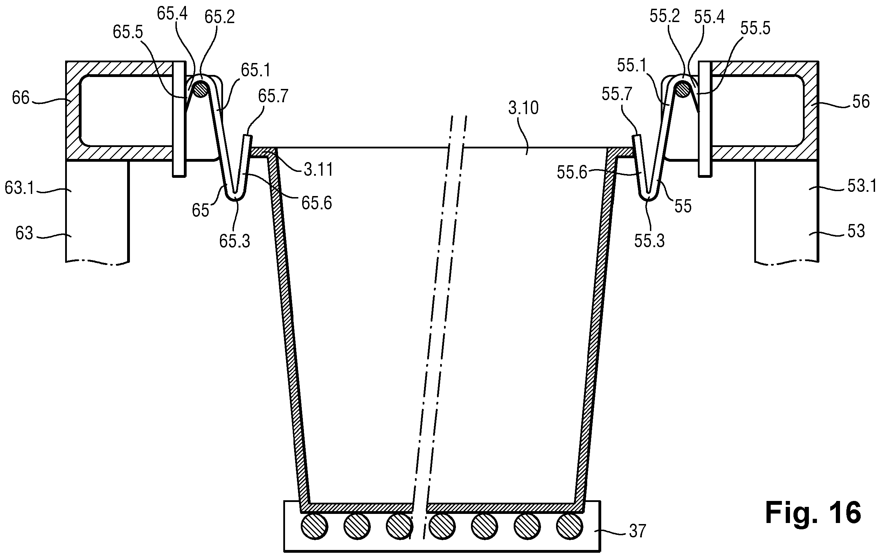

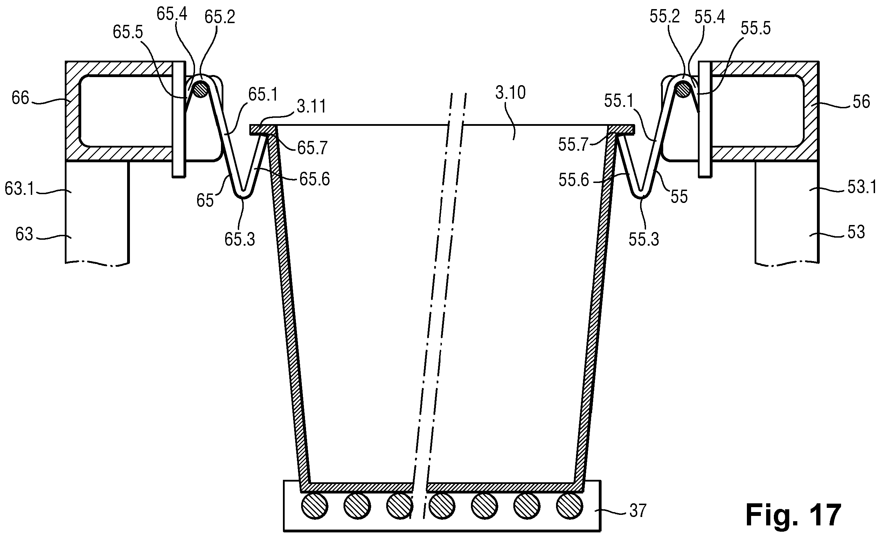

La poursuite du mouvement du premier bras 51 et du deuxième bras 61 relativement au premier conteneur 3.10 provoque une déformation des premier, deuxième, troisième et quatrième mors 54, 55, 64 et 65 contre le rebord 3.11 (figure 16). Lorsque la plateforme mobile 33 retourne dans sa position rétractée-dans laquelle le deuxième convoyeur 34 est au niveau du premier convoyeur 30- la première extrémité distale 54.7, la deuxième extrémité distale 55.7, la troisième extrémité distale 64.7 et la quatrième extrémité distale 65.7 ne sont plus face au premier rebord 3.11 et s'écartent sous le rebord 3.11 par détente élastique (figure 17).

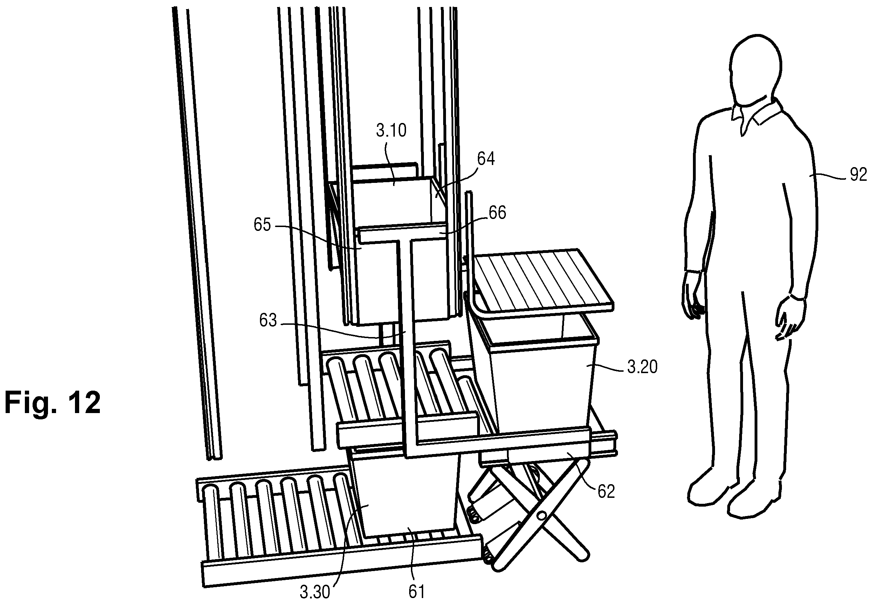

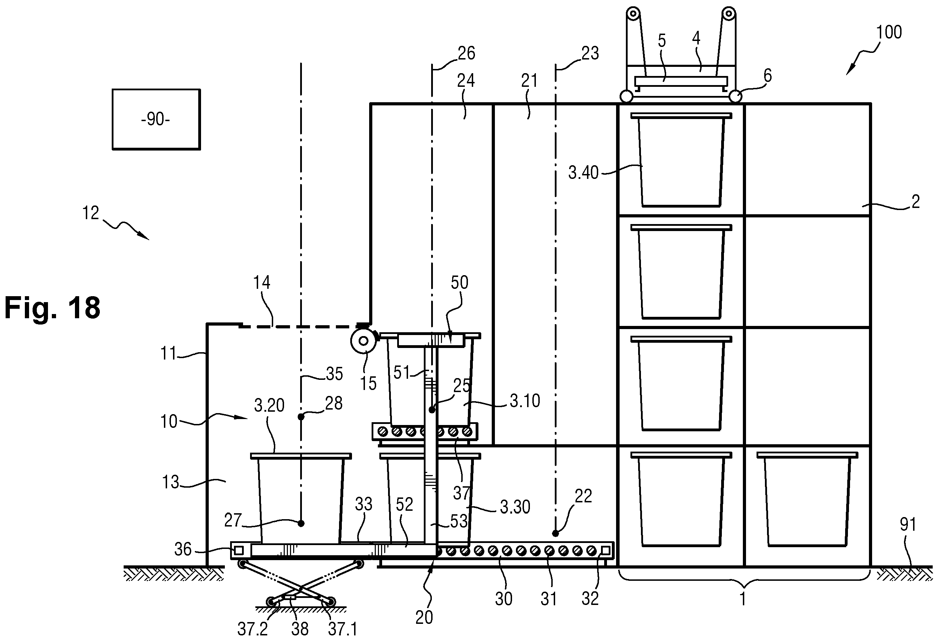

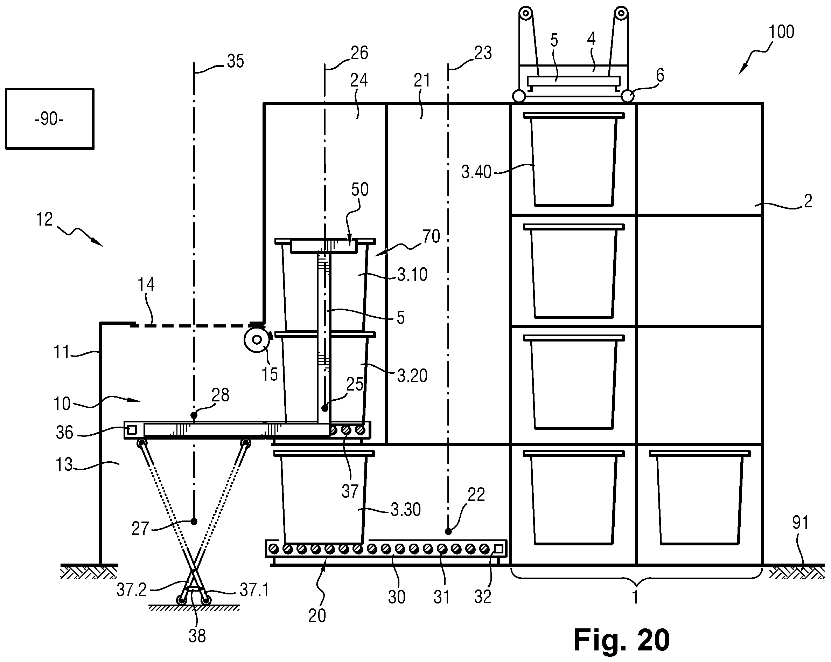

Au cours d'une dixième étape identique à la quatrième étape, l'unité de commande 90 commande le premier convoyeur 30 de manière à transférer le deuxième conteneur 3.20 en le troisième point de prise en charge 27 sur le deuxième convoyeur 34 (figure 18). Selon une onzième étape identique à la sixième étape, l'unité de commande 90 commande le premier actionneur 38 de la plateforme mobile 33 de manière à transférer le deuxième conteneur 3.20 depuis le troisième point de prise en charge 27 vers le quatrième point de présentation 28. Au cours de ce mouvement, le premier bras 51 et le deuxième bras 61 du dispositif 50 élèvent le premier conteneur 3.10 d'une valeur sensiblement supérieure (par construction) à la première hauteur H₃ (figures 12-13). Après ouverture et fermeture du volet 15, l'unité de commande 90 commande la plateforme mobile 33 de manière à transférer le deuxième conteneur 3.20 depuis le quatrième point de présentation 28 vers le deuxième point d'évacuation 25 (douzième étape-figure 20). Selon une treizième étape, l'unité de commande 90 commande le premier actionneur 38 et la plateforme mobile 33 retourne dans sa position rétractée.

Au cours de ce déplacement de la plateforme mobile 33, le premier bras 51 et le deuxième bras 61 réalisent un mouvement de translation relativement au troisième convoyeur 37 qui porte le deuxième conteneur 3.20. La base du premier conteneur 3.10 repose alors sur la portion supérieure du deuxième conteneur 3.20. La poursuite de ce mouvement de translation rapproche les premier, deuxième, troisième et quatrième mors 54, 55, 64 et 65 du deuxième rebord 3.21 jusqu'à ce que la deuxième inflexion 54.3, la quatrième inflexion 55.3, la sixième inflexion 64.3 et la huitième inflexion 65.3 arrivent au contact du deuxième rebord 3.21 et se déforment contre celui-ci. Lorsque la plateforme mobile 33 retourne dans sa position rétractée-dans laquelle le deuxième convoyeur 34 est au niveau du premier convoyeur 30- la première extrémité distale 54.7, la deuxième extrémité distale 55.7, la troisième extrémité distale 64.7 et la quatrième extrémité distale 65.7 ne sont plus face au premier rebord 3.11 et s'écartent sous le deuxième rebord 3.21 par détente élastique (figure 20). Une pile 70 de conteneurs 3 comprenant le premier conteneur 3.10 et le deuxième conteneur 3.20 a été constituée et repose au niveau du deuxième point d'évacuation 25. Cette pile 70 peut soit être évacuée par le chariot automatisé 4 soit accueillir le troisième conteneur 3.30 selon le procédé ci-dessus.

Bien entendu, l'invention n'est pas limitée aux modes de réalisation décrits mais englobe toute variante entrant dans le champ de l'invention telle que définie par les revendications.

En particulier,
- bien qu'ici la constitution d'une pile de conteneur ait été décrite en lien avec des conteneurs empilables, l'invention s'applique également à la réalisation d'une pile de conteneurs encastrables, c'est-à-dire dont une partie inférieure peut être accueillie au moins partiellement par le volume intérieur d'un autre conteneur identique ;
- bien qu'ici le système automatisé stockage et de mise à disposition de conteneurs comprenne une station de présentation, l'invention s'applique également à un système automatisé stockage et de mise à disposition de conteneurs comprenant plusieurs stations de présentation ;
- bien qu'ici le volume de stockage renferme des conteneur sensiblement parallélépipédique, l'invention s'applique également à d'autres types de conteneurs comme par exemple des palettes ou des conteneurs spéciaux de forme quelconque ;
- bien qu'ici la station de présentation comprenne un volet, l'invention s'applique également à d'autres types de dispositif d'occultation de l'ouverture d'accès comme par exemple une porte coulissante ou battante, de barreaux, un rideau ou un tiroir rotatif ;
- bien qu'ici le dispositif de convoyage soit intégralement contenu dans le châssis, l'invention s'applique également à un dispositif de convoyage partiellement contenu dans le volume intérieur, comme par exemple un dispositif de convoyage dont les moteurs sont hors du volume intérieur ou dont une partie des convoyeurs est située hors du volume intérieure ;
- bien qu'ici la direction d'amenée et la direction d'évacuation soient verticales, l'invention s'applique également à d'autres orientations de la direction d'amenée et la direction d'évacuation comme par exemple des directions horizontales, réalisant un angle non nul par rapport à la verticale, les directions d'amenée et la direction d'évacuation pouvant être différentes amenant à une direction d'amenée et une direction d'évacuation non parallèle ;
- bien qu'ici le dispositif de convoyage comprenne des convoyeurs à rouleaux, l'invention s'applique également à d'autres types de convoyeurs comme par exemple des convoyeurs à bandes ou à galets ;
- bien qu'ici, la première longueur et la première largeur soient respectivement supérieures à la deuxième largeur et la deuxième longueur de l'ouverture, l'invention s'applique également à d'autres types de dispositifs pour empêcher l'extraction d'un conteneur au travers de l'ouverture d'accès comme par exemple des barreaux, une seule des dimensions parmi la longueur largeur du bac qui est supérieure à la longueur ou la largeur de l'ouverture, des dispositifs de verrouillage du bac tels que des loquets ou pinces ;
- bien qu'ici le dispositif d'empilement de conteneurs comprenne quatre mors élastique, l'invention s'applique également à d'autres types de moyens de préhension de conteneurs commandés ou non comme par exemple des pinces commandées, des ventouses, un aimant, un doigt monté sur ressort ou une came. Ces dispositifs peuvent collaborer avec des conteneurs dépourvus de rebord ou disposant d'une interface d'accroche différente telle qu'un ergot en saillie ou une encoche ;
- bien qu'ici, le dispositif d'empilement de conteneurs comprenne des bras fixes solidaires de la plateforme, l'invention s'applique également à d'autres types de configurations permettant de lier le mouvement de déplacement de la plateforme mobile et une action de préhension d'un conteneur comme par exemple des bras montés à rotation sur la plateforme mobile et pourvus de moyens de rappel en position, un système de came/suiveur permettant d'écarter les bras lors de la descente de la plateforme mobile, ou encore un ensemble de câbles et poulies de renvois liant des mors à la plateforme mobile ;
- bien qu'ici la deuxième direction d'évacuation est sensiblement parallèle à la première direction d'amenée et la troisième direction de transfert est sensiblement orthogonale à la première direction d'amenée et à la deuxième direction d'évacuation, l'invention s'applique également à d'autres orientations relatives des deuxième direction d'évacuation avec la troisième direction de transfert ;
- bien qu'ici les conteneurs soient amenés selon une première direction d'amenée par un premier cheminement rectiligne, l'invention s'applique également à une amenée des conteneurs selon un cheminement non rectiligne comme par exemple une rampe hélicoïdale ou un premier cheminement comprenant une pluralité de pentes différentes, la première direction d'amenée correspondant alors à la direction du conteneur qui précède son arrivée au premier point de livraison. Il en en va de même pour la deuxième direction d'évacuation.

## Revendications

1. Station de présentation (10) d'au moins un conteneur (3.10, 3.20, 3.30, 3.40) comprenant :
- un châssis (11) délimitant un volume extérieur (12) et un volume intérieur (13) et présentant une ouverture d'accès (14) au volume intérieur (13) ;
- un dispositif de convoyage (20) contenu au moins partiellement dans le volume intérieur (13) et qui comprend une première cheminée (21) d'amenée de conteneur (3.10, 3.20, 3.30, 3.40) à un premier point de livraison (22), la première cheminée (21) s'étendant selon une première direction d'amenée (23) ;
le dispositif de convoyage (20) comprenant également :
- une deuxième cheminée (24) d'évacuation de conteneur (3.10, 3.20, 3.30, 3.40) depuis un deuxième point d'évacuation (25), la deuxième cheminée (24) s'étendant selon une deuxième direction d'évacuation (26) ;
- un premier convoyeur (30) motorisé pour transférer un conteneur (3.10, 3.20, 3.30, 3.40) selon une troisième direction de transfert (31) depuis le premier point de livraison (22) jusqu'à un troisième point de prise en charge (27) ;
**caractérisée en ce que** la station comprend une plateforme mobile (33) munie d'un deuxième convoyeur (34) motorisé, la plateforme mobile (33) étant agencée pour déplacer le deuxième convoyeur (34) selon une quatrième direction (35) de transfert entre le troisième point de prise en charge (27) et un quatrième point de présentation (28) agencé de manière à ce qu'un volume intérieur d'un conteneur (3.10, 3.20, 3.30, 3.40) situé en le quatrième point de présentation (28) soit accessible par un opérateur depuis le volume extérieur (12), le deuxième convoyeur (34) étant agencé pour transférer un conteneur (3.10, 3.20, 3.30, 3.40) depuis le quatrième point de présentation (28) au deuxième point d'évacuation (25) selon une cinquième direction de transfert (39).

2. Station de présentation (10) selon la revendication 1, dans laquelle la plateforme mobile (33) est de type « table à ciseaux ».

3. Station de présentation (10) selon l'une quelconque des revendications précédentes, dans laquelle la deuxième direction d'évacuation (26) et la première direction d'amenée (23) étant sensiblement rectilignes, la deuxième direction d'évacuation (26) est sensiblement parallèle à la première direction d'amenée (23) et/ou la troisième direction de transfert (31) est sensiblement orthogonale à la première direction d'amenée (23) et/ou orthogonale à la deuxième direction d'évacuation (26).

4. Station de présentation (10) selon l'une quelconque des revendications précédentes, dans laquelle la quatrième direction (35) est sensiblement orthogonale à la troisième direction (31).

5. Station de présentation (10) selon l'une quelconque des revendications précédentes, comprenant un dispositif d'occultation (15) de l'ouverture d'accès (14).

6. Station de présentation (10) selon l'une quelconque des revendications précédentes, dans laquelle lorsque le châssis (11) repose sur un support horizontal, la première direction d'amenée (23), la deuxième direction d'évacuation (26) et la quatrième direction de transfert (35) sont verticales, et dans laquelle la troisième direction de transfert (31) et la cinquième direction de transfert (39) sont horizontales.

7. Station de présentation (10) selon l'une quelconque des revendications précédentes, comprenant un dispositif pour empêcher l'extraction d'un conteneur (3.10, 3.20, 3.30, 3.40) au travers de l'ouverture d'accès (14).

8. Station de présentation (10) selon l'une quelconque des revendications précédentes, comprenant un dispositif d'empilement (50) de conteneurs (3.10, 3.20, 3.30, 3.40) pour réaliser une pile de conteneurs (3.10, 3.20, 3.30, 3.40) reposant au niveau du deuxième point d'évacuation (25).

9. Station de présentation (10) selon la revendication 8, dans laquelle le dispositif d'empilement (50) de conteneurs (3.10, 3.20, 3.30, 3.40) comprend un bras (51, 61) relié à la plateforme mobile (33).

10. Station de présentation (10) selon la revendication 9, dans laquelle le dispositif d'empilement (50) de conteneurs (3.10, 3.20, 3.30, 3.40) comprend au moins un mors élastique (54, 55, 64, 65).

11. Système automatisé de stockage et de mise à disposition de conteneurs (100) comprenant un volume de stockage (1) relié à au moins une station de présentation (10) selon l'une quelconque des revendications précédentes.

12. Système automatisé de stockage et de mise à disposition de conteneurs (100) selon la revendication 11, dans lequel le volume de stockage (1) comprend une pluralité d'alvéoles (2) renfermant chacune un conteneur (3et dans lequel la première longueur (L30) du premier convoyeur (30) est choisie pour accueillir deux conteneurs (3.10, 3.20, 3.30, 3.40) et/ou la deuxième longueur (L34) du deuxième convoyeur est choisie pour accueillir un seul conteneur (3.10, 3.20, 3.30, 3.40).

13. Procédé de présentation de conteneurs (3.10, 3.20, 3.30, 3.40) mis en œuvre par une station de présentation (10) selon la revendication 1, comprenant les étapes suivantes :
- déposer un premier conteneur (3.10) en le premier point de livraison (22) ;
- commander le premier convoyeur (30) de manière à transférer le premier conteneur (3.10) en le troisième point de prise en charge (27) ;
- actionner la plateforme mobile (33) de manière à transférer le premier conteneur (3.10) depuis le troisième point de prise en charge (27) vers le quatrième point de présentation (28) ;
- commander le deuxième convoyeur (34) de manière à transférer le premier conteneur (3.10) depuis le quatrième point de présentation (28) vers le deuxième point d'évacuation (25).

14. Procédé de présentation de conteneurs (3.10, 3.20, 3.30, 3.40) selon la revendication 13, la première longueur (L30) du premier convoyeur (30) étant choisie pour accueillir deux conteneurs (3.10, 3.20, 3.30, 3.40) et la deuxième longueur (L34) du deuxième convoyeur (34) étant choisie pour accueillir un seul conteneur (3.10, 3.20, 3.30, 3.40), le procédé comprenant les étapes supplémentaires suivantes :
- antérieurement à l'étape de commander le premier convoyeur (30) de manière à transférer le premier conteneur (3.10) depuis le premier point de livraison (22) vers le troisième point de prise en charge (27), commander le premier convoyeur (30) de manière à libérer le premier point de livraison (22) tout en conservant le premier conteneur (3.10) sur le premier convoyeur (30) ;
- déposer un deuxième conteneur (3.20) en le premier point de livraison (22) ;
- postérieurement à l'étape de commander le premier convoyeur (30) de manière à transférer le premier conteneur (3.10) en le troisième point de prise en charge (27), déposer un troisième conteneur (3.30) en le premier point de livraison (22).

15. Procédé de présentation de conteneurs (3.10, 3.20, 3.30, 3.40) selon la revendication 13 ou 14, la station de présentation (10) comprenant un dispositif d'occultation (15) de l'ouverture d'accès (14), le procédé comprenant une étape supplémentaire, située entre l'étape d'actionner la plateforme mobile (33) de manière à transférer le premier conteneur (3.10) depuis le troisième point de prise en charge (27) vers le quatrième point de présentation (28) et l'étape de commander le deuxième convoyeur (34) de manière à transférer le premier conteneur (3.10) depuis le quatrième point de présentation (28) vers le deuxième point d'évacuation (25), l'étape supplémentaire consistant à actionner le dispositif d'occultation (15) de manière à libérer l'ouverture d'accès (14) puis actionner le dispositif d'occultation (15) de manière à occulter l'ouverture d'accès (14).

16. Procédé de présentation de conteneurs (3.10, 3.20, 3.30, 3.40) selon l'une quelconque des revendications 13 à 15, la station de présentation (10) comprenant un dispositif d'empilement (50) de conteneurs (3.10, 3.20, 3.30, 3.40) pour réaliser une pile (70) de conteneurs (3.10, 3.20, 3.30, 3.40) reposant au niveau du deuxième point d'évacuation (25), le procédé comprend l'étape de réaliser une pile (70) de conteneurs (3.10, 3.20, 3.30, 3.40) au niveau du deuxième point d'évacuation (25).

## Patentansprüche

1. Präsentationsstation (10) für wenigstens einen Behälter (3.10, 3.20, 3.30, 3.40), umfassend:
- einen Rahmen (11), der ein Außenvolumen (12) und ein Innenvolumen (13) begrenzt und eine Zugangsöffnung (14) zum Innenvolumen (13) aufweist,
- eine wenigstens teilweise im Innenvolumen (13) enthaltene Fördervorrichtung (20), die einen ersten Schacht (21) zum Zuführen von Behältern (3.10, 3.20, 3.30, 3.40) zu einem ersten Lieferpunkt (22) aufweist, wobei sich der erste Schacht (21) in einer ersten Zuführrichtung (23) erstreckt,
wobei die Fördervorrichtung (20) ferner umfasst:
- einen zweiten Schacht (24) zum Abführen von Behältern (3.10, 3.20, 3.30, 3.40) von einem zweiten Abführpunkt (25) aus, wobei sich der zweite Schacht (24) in einer zweiten Abführrichtung (26) erstreckt,
- einen ersten motorisierten Förderer (30) zum Transferieren eines Behälters (3.10, 3.20, 3.30, 3.40) in einer dritten Transferrichtung (31) von einem ersten Lieferpunkt (22) zu einem dritten Abnahmepunkt (27),
**dadurch gekennzeichnet, dass** die Station eine mobile Plattform (33) mit einem zweiten motorisierten Förderer (34) umfasst, wobei die mobile Plattform (33) dazu angeordnet ist, den zweiten Förderer (34) in einer vierten Transferrichtung (35) zwischen dem dritten Abnahmepunkt (27) und einem vierten Präsentationspunkt (28) zu bewegen, so angeordnet, dass ein Innenvolumen eines am vierten Präsentationspunkt angeordneten Behälters (3.10, 3.20, 3.30, 3.40) für einen Bediener von dem Außenvolumen (12) her zugänglich ist, wobei der zweite Förderer (34) dazu angeordnet ist, einen Behälter (3.10, 3.20, 3.30, 3.40) von dem vierten Präsentationspunkt (28) zu dem zweiten Abführpunkt (25) in einer fünften Transferrichtung (39) zu übertragen.

2. Präsentationsstation (10) nach Anspruch 1, wobei die mobile Plattform (33) vom Typ "Scherentisch" ist.

3. Präsentationsstation (10) nach einem der vorhergehenden Ansprüche, wobei die zweite Abführrichtung (26) und die erste Zuführrichtung (23) im Wesentlichen geradlinig sind, wobei die zweite Abführrichtung (26) im Wesentlichen parallel zur ersten Zuführrichtung (23) ist und/oder die dritte Transferrichtung (31) im Wesentlichen orthogonal zur ersten Zuführrichtung (23) und/oder orthogonal zur zweiten Abführrichtung (26) ist.

4. Präsentationsstation (10) nach einem der vorhergehenden Ansprüche, wobei die vierte Richtung (35) im Wesentlichen orthogonal zur dritten Richtung (31) ist.

5. Präsentationsstation (10) nach einem der vorhergehenden Ansprüche, umfassend eine Vorrichtung zum Verdecken (15) der Zugangsöffnung (14).

6. Präsentationsstation (10) nach einem der vorhergehenden Ansprüche, wobei, wenn der Rahmen (11) auf einem horizontalen Träger ruht, die erste Zuführrichtung (23), die zweite Abführrichtung (26) und die vierte Transferrichtung (35) vertikal sind und wobei die dritte Transferrichtung (31) und die fünfte Transferrichtung (39) horizontal sind.

7. Präsentationsstation (10) nach einem der vorhergehenden Ansprüche, umfassend eine Vorrichtung zum Verhindern des Herausziehens eines Behälters (3.10, 3.20, 3.30, 3.40) durch die Zugangsöffnung (14).

8. Präsentationsstation (10) nach einem der vorhergehenden Ansprüche, umfassend eine Stapelvorrichtung (50) für Behälter (3.10, 3.20, 3.30, 3.40) zum Bilden eines Stapels von Behältern (3.10, 3.20, 3.30, 3.40), der auf Höhe des zweiten Abführpunkts (25) ruht.

9. Präsentationsstation (10) nach Anspruch 8, wobei die Stapelvorrichtung (50) für Behälter (3.10, 3.20, 3.30, 3.40) einen Arm (51, 61) umfasst, der mit der mobilen Plattform (33) verbunden ist.

10. Präsentationsstation (10) nach Anspruch 9, wobei die Stapelvorrichtung (50) für Behälter (3.10, 3.20, 3.30, 3.40) wenigstens eine elastische Klemme (54, 55, 64, 65) umfasst.

11. Automatisiertes System zum Lagern und Bereitstellen von Behältern (100), umfassend ein Lagervolumen (1), das mit wenigstens einer Präsentationsstation (10) nach einem der vorhergehenden Ansprüche verbunden ist.

12. Automatisiertes System zum Lagern und Bereitstellen von Behältern (100) nach Anspruch 11, wobei das Lagervolumen (1) eine Mehrzahl von Zellen (2) umfasst, die jeweils einen Behälter (3.10, 3.20, 3.30, 3.40) einschließen, wobei die erste Länge (L30) des ersten Förderers (30) so gewählt ist, dass er zwei Behälter (3.10, 3.20, 3.30, 3.40) aufnehmen kann, und/oder die zweite Länge (L34) des zweiten Förderers so gewählt ist, dass er einen einzelnen Behälter (3.10, 3.20, 3.30, 3.40) aufnehmen kann.

13. Verfahren zum Bereitstellen von Behältern (3.10, 3.20, 3.30, 3.40) durch eine Präsentationsstation (10) nach Anspruch 1, umfassend die folgenden Schritte:
- Deponieren eines ersten Behälters (3.10) am ersten Lieferpunkt (22),
- Steuern des ersten Förderers (30), um den ersten Behälter (3.10) an den dritten Abnahmepunkt (27) zu transferieren,
- Betätigen der mobilen Plattform (33), um den ersten Behälter (3.10) von dem dritten Abnahmepunkt (27) zu dem vierten Präsentationspunkt (28) zu transferieren,
- Steuern des zweiten Förderers (34), um den ersten Behälter (3.10) von dem vierten Präsentationspunkt (28) zu dem zweiten Abführpunkt (25) zu transferieren.

14. Verfahren zur Präsentations von Behältern (3.10, 3.20, 3.30, 3.40) nach Anspruch 13, wobei die erste Länge (L30) des ersten Förderers (30) dazu gewählt ist, zwei Behälter (3.10, 3.20, 3.30, 25, 3.40) aufzunehmen, und die zweite Länge (L34) des zweiten Förderers (34) dazu gewählt ist, nur einen Behälter (3.10, 3.20, 3.30, 3.40) aufzunehmen, wobei das Verfahren die folgenden zusätzlichen Schritte umfasst:
- vor dem Schritt des Steuerns des ersten Förderers (30) zum Transferieren des ersten Behälters (3.10) vom ersten Lieferpunkt (22) zum dritten Abnahmepunkt (27), Steuern des ersten Förderers (30) derart, dass der Lieferpunkt (22) freigegeben wird, während der Behälter (3.10) an dem ersten Förderer (30) verbleibt,
- Deponieren eines zweiten Behälters (3.20) am ersten Lieferpunkt (22),
- nach dem Schritt des Steuerns des ersten Förderers (30) zum Transferieren des ersten Behälters (3.10) zum dritten Abnahmepunkt (27) Deponieren eines dritten Behälters (3.30) am ersten Lieferpunkt (22).

15. Verfahren zur Präsentation von Behältern (3.10, 3.20, 3.30, 3.40) nach Anspruch 13 oder 14, wobei die Präsentationsstation (10) eine Vorrichtung zum Verdecken (15) der Zugangsöffnung (14) umfasst, wobei das Verfahren einen zusätzlichen Schritt umfasst, der zwischen dem Schritt des Betätigens der mobilen Plattform (33) für den Transfer des ersten Behälters (3.10) von dem dritten Abnahmepunkt (27) zum vierten Präsentationspunkt (28), und dem Schritt des Steuerns des zweiten Förderers (34) für den Transfer des ersten Behälters (3.10) vom vierten Präsentationspunkt (28) zum zweiten Abführpunkt (25) angeordnet ist, wobei der zusätzliche Schritt darin besteht, die Verdeckvorrichtung (15) zu betätigen, um die Zugangsöffnung (14) freizugeben, und anschließend die Verdeckvorrichtung (15) zu betätigen, um die Zugangsöffnung (14) zu verdecken.

16. Verfahren zur Präsentation von Behältern (3.10, 3.20, 3.30, 3.40) nach einem der Ansprüche 13 bis 15, wobei die Präsentationsstation (10) eine Stapelvorrichtung (50) für Behälter (3.10, 3.20, 3.30, 3.40) umfasst, zum Bilden eines Stapels (70) von Behältern (3.10, 3.20, 3.30, 3.40) auf Höhe des zweiten Abführpunkts (25), wobei das Verfahren den Schritt des Bildens eines Stapels (70) von Behältern (3.10, 3.20, 3.30, 3.40) auf Höhe des zweiten Abführpunktes (25) umfasst.

## Claims

1. A station (10) for presenting at least one container (3.10, 3.20, 3.30, 3.40) comprising:
- a frame (11) delimiting an external volume (12) and an internal volume (13) and having an aperture (14) for access to the internal volume (13);
- a conveying device (20) contained at least partially in the internal volume (13) and which comprises a first chimney (21) for supplying containers (3.10, 3.20, 3.30, 3.40) to a first point of delivery (22), the first chimney (21) extending in a first direction of supply (23);
the conveying device (20) also comprising:
- a second chimney (24) for evacuating containers (3.10, 3.20, 3.30, 3.40) from a second point of evacuation (25), the second chimney (24) extending in a second direction of evacuation (26);
- a first conveyor (30) motorized to transfer a container (3.10, 3.20, 3.30, 3.40) in a third direction of transfer (31) from the first point of delivery (22) to a third point of transfer (27); **characterized in that** the station comprises
- a movable platform (33) provided with a second motorized conveyor (34), the movable platform (33) being arranged to move the second conveyor (34) in a fourth direction (35) of transfer between the third point of transfer (27) and a fourth point of presentation (28) arranged in such a way that an internal volume of a container (3.10, 3.20, 3.30, 3.40) situated at the fourth point of presentation (28) is accessible by an operator from the external volume (12), the second conveyor (34) being arranged to transfer a container (3.10, 3.20, 3.30, 3.40) from the fourth point of presentation (28) to the second point of evacuation (25) in a fifth direction of transfer (39).

2. The presentation station (10) as claimed in claim 1, wherein the movable platform (33) is of "scissor lift table" type.

3. The presentation station (10) as claimed in any one of the preceding claims, wherein, the second direction of evacuation (26) and the first direction of supply (23) being substantially rectilinear, the second direction of evacuation (26) is substantially parallel to the first direction of supply (23) and/or the third direction of transfer (31) is substantially orthogonal to the first direction of supply (23) and/or orthogonal to the second direction of evacuation (26).

4. The presentation station (10) as claimed in any one of the preceding claims, wherein the fourth direction (35) is substantially orthogonal to the third direction (31).

5. The presentation station (10) as claimed in any one of the preceding claims, comprising a covering device (15) for covering the access aperture (14).

6. The presentation station (10) as claimed in any one of the preceding claims, wherein, when the frame (11) rests on a horizontal support, the first direction of supply (23), the second direction of evacuation (26) and the fourth direction of transfer (35) are vertical, and wherein the third direction of transfer (31) and the fifth direction of transfer (39) are horizontal.

7. The presentation station (10) as claimed in any one of the preceding claims, comprising a device for preventing the extraction of a container (3.10, 3.20, 3.30, 3.40) through the access aperture (14).

8. The presentation station (10) as claimed in any one of the preceding claims, comprising a stacking device (50) for stacking containers (3.10, 3.20, 3.30, 3.40) to produce a stack of containers (3.10, 3.20, 3.30, 3.40) resting at the second point of evacuation (25).

9. The presentation station (10) as claimed in claim 8, wherein the stacking device (50) for stacking containers (3.10, 3.20, 3.30, 3.40) comprises an arm (51, 61) linked to the movable platform (33).

10. The presentation station (10) as claimed in claim 9, wherein the stacking device (50) for stacking containers (3.10, 3.20, 3.30, 3.40) comprises at least one elastic jaw (54, 55, 64, 65).

11. An automated system for storing and supplying containers (100) comprising a storage volume (1) linked to at least one presentation station (10) as claimed in any one of the preceding claims.

12. An automated system for storing and supplying containers (100) as claimed in claim 11, wherein the storage volume (1) comprises a plurality of cells (2) each enclosing a container (3.10, 3.20, 3.30, 3.40) and wherein the first length (L30) of the first conveyor (30) is chosen to accommodate two containers (3.10, 3.20, 3.30, 3.40) and/or the second length (L34) of the second conveyor is chosen to accommodate a single container (3.10, 3.20, 3.30, 3.40).

13. A method for presenting containers (3.10, 3.20, 3.30, 3.40) implemented by a presentation station (10) as claimed in claim 1, comprising the following steps:
- depositing a first container (3.10) at the first point of delivery (22);
- controlling the first conveyor (30) so as to transfer the first container (3.10) to the third point of transfer (27);
- actuating the movable platform (33) so as to transfer the first container (3.10) from the third point of transfer (27) to the fourth point of presentation (28);
- controlling the second conveyor (34) so as to transfer the first container (3.10) from the fourth point of presentation (28) to the second point of evacuation (25).

14. The method for presenting containers (3.10, 3.20, 3.30, 3.40) as claimed in claim 13, the first length (L30) of the first conveyor (30) being chosen to accommodate two containers (3.10, 3.20, 3.30, 3.40) and the second length (L34) of the second conveyor (34) being chosen to accommodate a single container (3.10, 3.20, 3.30, 3.40), the method comprising the following additional steps:
- prior to the step of controlling the first conveyor (30) so as to transfer the first container (3.10) from the first point of delivery (22) to the third point of transfer (27), controlling the first conveyor (30) so as to free the first point of delivery (22) while keeping the first container (3.10) on the first conveyor (30);
- depositing a second container (3.20) at the first point of delivery (22);
- following the step of controlling the first conveyor (30) so as to transfer the first container (3.10) to the third point of transfer (27), depositing a third container (3.30) at the first point of delivery (22).

15. The method for presenting containers (3.10, 3.20, 3.30, 3.40) as claimed in claim 13 or 14, the presentation station (10) comprising a covering device (15) for covering the access aperture (14), the method comprising an additional step, situated between the step of actuating the movable platform (33) so as to transfer the first container (3.10) from the third point of transfer (27) to the fourth point of presentation (28) and the step of controlling the second conveyor (34) so as to transfer the first container (3.10) from the fourth point of presentation (28) to the second point of evacuation(25), the additional step consisting in actuating the covering device (15) so as to free the access aperture (14) then actuating the covering device (15) so as to cover the access aperture (14).

16. The method for presenting containers (3.10, 3.20, 3.30, 3.40) as claimed in any one of claims 13 to 15, the presentation station (10) comprising a stacking device (50) for stacking containers (3.10, 3.20, 3.30, 3.40) to produce a stack (70) of containers (3.10, 3.20, 3.30, 3.40) resting at the second point of evacuation(25), the method comprises the step of producing a stack (70) of containers (3.10, 3.20, 3.30, 3.40) at the second point of evacuation (25) .
